# FASCICULE DE BREVET EUROPEEN

(11) **EP 1 530 539 B1**
(45) Date de publication et mention de la délivrance du brevet: **17.04.2013**
(21) Numéro de dépôt: 03758256.6
(22) Date de dépôt: 21.08.2003
(51) Int. Cl.: B64D 11/00, B64D 11/06

(54) **AMENAGEMENT INTERIEUR D'UNE CABINE D'AERONEF**
INNENAUSBAU EINER FLUGZEUGKABINE
INTERNAL LAYOUT OF AN AIRCRAFT CABIN

(30) Priorité: 23.08.2002 FR 0210512
(43) Date de publication de la demande: 18.05.2005
(73) Titulaire: Airbus, 31700 Blagnac Cédex (FR)
(72) Inventeur: SAINT-JALMES, Bruno, F-31400 Toulouse (FR)
(74) Mandataire: Stankoff, Hélène
(86) Numéro de dépôt international: PCT/FR2003/002558
(87) Numéro de publication internationale: WO 2004/018290

(56) Documents cités:
- EP-A- 0 980 825
- WO-A-96/18537
- GB-A- 327 899
- US-A- 2 124 003
- US-A1- 2002 070 314
- DORNHEIM M A: "DASSAULT'S FALCON 2000: NEW BIG CABIN TWINJET" AVIATION WEEK AND SPACE TECHNOLOGY, MCGRAW-HILL INC. NEW YORK, US, vol. 138, no. 13, 29 mars 1993 (1993-03-29), pages 42-44,45, XP000356104 ISSN: 0005-2175

## Description

La présente invention concerne un aménagement intérieur de cabine d'aéronef tel par exemple un avion. Elle concerne plus particulièrement un ensemble de sièges, éventuellement convertibles en lit, disposé à l'intérieur d'une cabine d'aéronef.

Pour attirer plus de passagers, les compagnies aériennes ont tendance à accroître le confort offert aux passagers lors d'un voyage en avion. En général, cet accroissement de confort signifie qu'un espace individuel plus important est réservé pour chaque passager. Pour répondre aux demandes de la clientèle, il est même connu d'aménager autour d'un siège une cloison pour séparer le passager assis sur ce siège des passagers voisins. Le document WO-96/18537 montre ainsi un tel siège associé à une telle cloison.

De tels modules pour passagers ont été conçus pour équiper des espaces de grand confort, appelés aussi espaces "première classe". Pour pouvoir également adapter ces modules à des espaces de confort moindre, désignés habituellement sous le nom d'espaces "classe affaire", il a été proposé dans le document WO-00/21831 de combiner de façon particulière deux modules tels celui décrit dans le document WO-96/18537 d'une façon particulière pour gagner de la place et ainsi mettre dans un espace donné d'une cabine d'aéronef un nombre plus grand de modules. Le document US 2,124,003 décrit les caractéristiques du préambule de la revendication 1.

La présente invention a alors pour but de fournir une combinaison de sièges munis ou non d'une cloison, qui permet d'optimiser dans une cabine d'aéronef l'espace disponible pour loger le plus grand nombre possible de sièges. Lorsque ces sièges sont munis d'une cloison les entourant au moins partiellement, la présente invention a également pour but de fournir une forme optimale de cette cloison adaptée à la disposition des sièges selon l'invention.

A cet effet, elle propose un ensemble de sièges d'aéronef dans une cabine d'aéronef comportant deux rangées de sièges disposées transversalement par rapport à l'axe longitudinal de la cabine dans laquelle ils se trouvent, un couloir longitudinal unique permettant l'accès aux rangées transversales.

Selon l'invention, les deux rangées transversales sont disposées en vis-à-vis, un couloir transversal sépare les deux rangées de sièges et dans chaque rangée de sièges, au moins un siège se trouve d'un côté du couloir longitudinal et au moins deux sièges se trouvent de l'autre côté du couloir longitudinal

Cet ensemble de sièges permet d'optimiser l'espace disponible dans une cabine d'aéronef pouvant accueillir au moins trois passagers de front. Il suffit de disposer les uns à côté des autres autant d'ensembles de sièges tels que définis ci-dessus pour aménager un tronçon de cabine d'un aéronef. Si de la place est encore disponible mais pas suffisamment pour un ensemble de sièges, il est encore éventuellement envisageable de disposer une rangée de sièges dans l'espace disponible restant. Les sièges d'un tel ensemble restent accessibles facilement aux passagers. Ainsi un passager peut accéder à son siège ou le quitter sans avoir à gêner un passager voisin. Un ensemble de sièges selon la présente invention permet donc avec un seul couloir longitudinal d'avoir cet avantage pour les passagers de pouvoir librement se déplacer sans avoir à s'excuser auprès d'un ou plusieurs passagers voisins. Enfin, l'utilisation d'ensembles de sièges selon l'invention pour l'aménagement intérieur d'une cabine d'avion permet de faciliter la circulation à l'intérieur de cette cabine. En effet, grâce aux couloirs transversaux il devient possible de se croiser dans le couloir longitudinal sans peine. Une personne peut se "garer" dans un couloir transversal, sans gêner les passagers assis, laisser passer une autre personne se trouvant dans le couloir longitudinal et reprendre son déplacement une fois l'autre personne passée.

Chaque siège est de préférence orienté parallèlement à l'axe du couloir longitudinal. Ainsi tous les sièges de l'ensemble sont identiques et l'accès à chaque siège se fait de la même manière, quelle que soit la position du siège dans sa rangée.

Un ensemble de sièges d'aéronef selon l'invention est bien adapté au cas où à chaque siège est associé un équipement disposé en regard et à distance du siège, de largeur inférieure à celle du siège. Cet équipement permet tout d'abord d'augmenter le confort du passager et ensuite il délimite l'espace individuel destiné au passager de l'espace collectif (ici le couloir transversal) prévu pour la circulation. Cet équipement peut être simplement un repose-pied et/ou un coffre à bagages. Il peut aussi par exemple être un meuble intégrant un écran de télévision pour permettre au passager de visualiser un film. On prévoit avantageusement que l'équipement comporte une surface d'appui disposée à une hauteur sensiblement égale à celle de l'assise du siège, à une dizaine de centimètres près. Cette surface d'appui peut alors servir à recevoir par exemple un visiteur. On peut aussi prévoir que chaque siège coopère avec l'équipement disposé face à lui pour réaliser une surface de couchage. La surface d'appui peut alors servir d'extrémité de lit.

Dans une forme de réalisation, chaque siège d'un ensemble selon l'invention comporte une assise, un dossier et deux accoudoirs, et le siège est entouré du côté de son dossier et de ses accoudoirs d'une paroi latérale servant de séparation avec un siège voisin. On réalise ainsi pour chaque passager une séparation isolant le passager des passagers voisins.

Dans le cas où un équipement est prévu face à chaque siège, une forme de réalisation préférée prévoit que chaque siège comporte une assise, un dossier et deux accoudoirs, qu'une paroi latérale vient entourer chaque siège du côté de son dossier et de ses accoudoirs, ainsi que l'équipement associé au siège, et qu'au moins une ouverture est prévue dans la paroi latérale pour accéder au siège. Chaque passager bénéficie alors d'un module individuel, comprenant le siège, l'équipement et la paroi latérale qui délimite parfaitement l'espace qui lui est destiné tout en l'isolant des autres passagers.

Dans cette configuration préférée, chaque équipement peut être sensiblement centré sur l'axe longitudinal du siège correspondant, et chaque paroi latérale présente alors de préférence une ouverture entre le siège et l'équipement sur chacun de ses côtés se trouvant face à un siège voisin. Dans cette forme de réalisation, tous les sièges peuvent être identiques si l'on prévoit que chaque paroi latérale présente deux ouvertures de largeur identique, une de chaque côté du siège correspondant, et qu'une porte est prévue pour fermer l'une ou l'autre des ouvertures.

Dans cette même configuration dans laquelle une paroi latérale entoure à chaque fois un siège et l'équipement correspondant, on peut aussi prévoir que la paroi latérale comporte un premier côté sensiblement parallèle au couloir longitudinal, que le siège et l'équipement sont disposés contre ce premier côté, qu'un second côté de la paroi, opposé au premier côté, s'évase par rapport à ce premier côté en partant de l'équipement, et que l'ouverture pour accéder au siège est réalisée dans le second côté. Cette forme de réalisation permet d'optimiser l'accès aux sièges. La largeur de l'accès est ainsi la plus grande possible, ce qui est bien entendu favorable au plus grand confort des passagers. Dans cette forme de réalisation on a deux types de sièges : un premier type de sièges pour lesquels le premier côté de la paroi latérale, celui qui est sensiblement parallèle au couloir longitudinal, se trouve à droite d'un passager assis sur le siège et un second type de sièges pour lesquels le premier côté de la paroi se trouve à gauche d'un passager assis sur le siège. Les sièges sont alors de préférence disposés de telle sorte que pour les sièges se trouvant à proximité d'une paroi de cabine, le premier côté de la paroi correspondante fait face à la paroi de cabine, et que, dans une rangée transversale de sièges, entre la paroi de cabine et le couloir longitudinal, les types de sièges alternent d'un siège à l'autre.

La présente invention concerne également un aéronef, caractérisé en ce qu'il comporte au moins un ensemble de sièges tel que décrit précédemment.

D'autres détails et avantages de la présente invention ressortiront de la description qui suit, faite en référence au dessin schématique annexé, sur lequel :
La figure 1 montre des ensembles de sièges selon l'invention dans une cabine d'aéronef avec quatre sièges de front,
La figure 2 représente des ensembles de sièges selon l'invention dans une cabine d'aéronef avec cinq sièges de front,
Les figures 3 et 4 représentent des ensembles de sièges selon l'invention avec six sièges de front,
Les figures 5 et 6 représentent des ensembles de sièges selon l'invention avec sept sièges de front,
Les figures 7 à 9 représentent des ensembles de sièges selon l'invention avec huit sièges de front,
La figure 10 représente des ensembles de sièges selon l'invention avec neuf sièges de front,
La figure 11 représente des ensembles de sièges selon l'invention avec dix sièges de front.
La figure 12 représente des ensembles de sièges selon l'invention avec onze sièges de front,
La figure 13 représente des ensembles de sièges selon l'invention avec douze sièges de front,
La figure 14 montre une configuration identique à celle de la figure 5 mais avec d'autres sièges, et
La figure 15 montre à échelle agrandie un siège tel ceux montrés sur les figures 1 à 13.

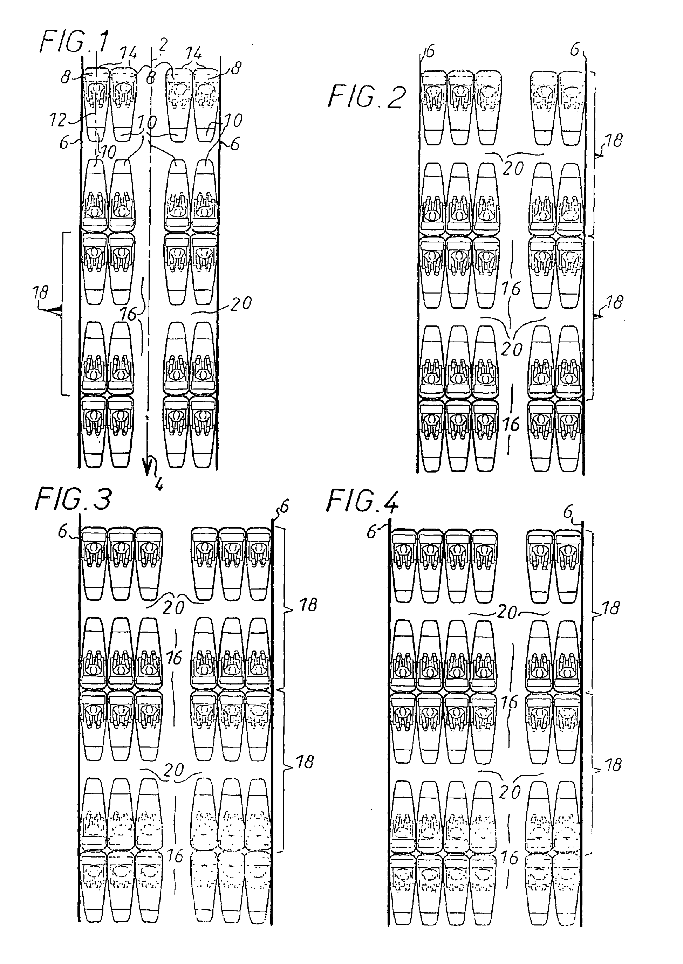

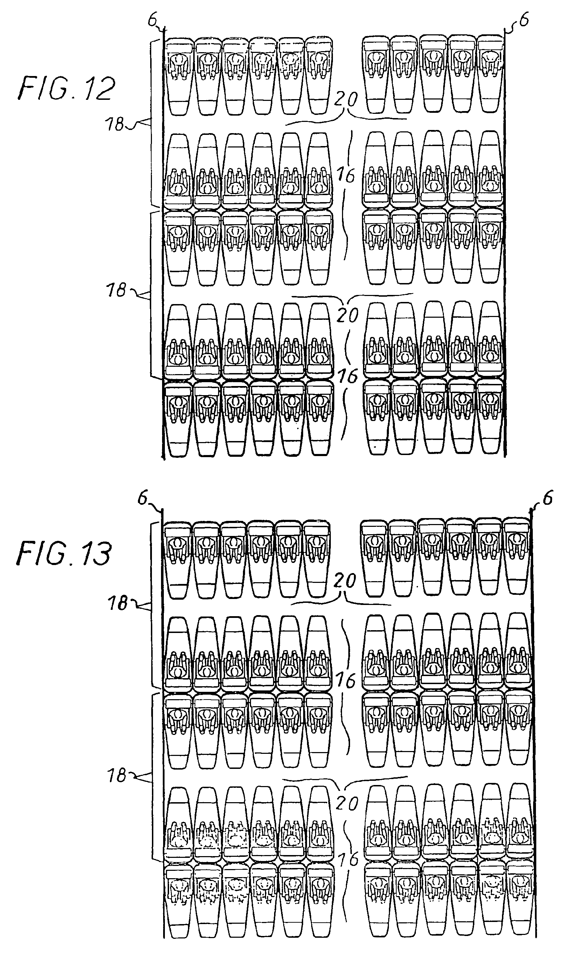

Les figures 1 à 14 du dessin représentent chacune schématiquement un tronçon de cabine d'avion. De façon classique, ce tronçon de cabine d'avion est réalisé dans un fuselage de forme générale cylindrique circulaire. Ce tronçon de cabine possède ainsi un axe longitudinal 2 qui correspond sensiblement à l'axe de révolution du fuselage. Le sens de déplacement de l'avion en vol est indiqué par la flèche 4. La cabine de l'avion présente une paroi de cabine 6 schématisée sans épaisseur uniquement par un trait, ainsi qu'un plancher sur lequel sont fixés des sièges destinés à recevoir des passagers.

Des issues de secours (non représentées) sont régulièrement disposées dans la cabine pour permettre une évacuation rapide, en cas de nécessité, des passagers de cette cabine. Les figures du dessin représentent par exemple un tronçon de cabine disposé entre deux issues de secours qui se suivent longitudinalement dans le sens de l'avion. Chaque figure représente une disposition de sièges dans la cabine de l'avion de manière à pouvoir mettre le plus grand nombre de passagers assis dans le tronçon de cabine considéré tout en garantissant à ces passagers un grand confort.

Sur toutes les figures, on a considéré que chaque passager disposait d'un siège 8 muni, de façon classique, d'une assise, d'un dossier et de deux accoudoirs. Face à ce siège, et à distance de celui-ci, se trouve à chaque fois un équipement 10 qui peut être par exemple un coffre à bagages, une tablette, un repose-pieds, ou encore un coffret intégrant par exemple un écran télé. De préférence, cet équipement comporte une surface d'appui se trouvant sensiblement (à 20 cm près par exemple) à la même hauteur que l'assise du siège 8 correspondant. Si le siège est alors un siège convertible, il peut venir coopérer avec cette surface d'appui pour former une surface de couchage formant lit pour le passager. Ce lit présente alors une partie fixe. Ceci permet alors de limiter les pièces en mouvement du siège convertible. La masse globale du lit ainsi formé peut être diminuée.

Chaque équipement 10 est de largeur moindre que le siège. De plus, si l'on considère le plan de symétrie d'un siège 8, représenté par un axe 12 sur la figure 1, l'équipement 10 est sensiblement centré sur ce plan de symétrie.

Dans les exemples de réalisation représentés au dessin, l'espace individuel destiné à chaque passager est délimité par une paroi latérale 14. Cette paroi vient entourer le siège du côté de son dossier et de ses deux accoudoirs et entoure également l'équipement 10. Cette paroi latérale est par exemple plus haute du côté du siège 8 que du côté de l'équipement 10. A titre d'exemple, on peut considérer par exemple que les parois ont une hauteur comprise entre 0,60 m et 1,50 m. Une ouverture est prévue dans chaque paroi latérale 14 pour permettre d'accéder au siège 8 se trouvant à l'intérieur de celle-ci. Cette ouverture est bien entendu à chaque fois réalisée entre le siège 8 et l'équipement 10. Selon les cas, et comme expliqué ci-après, une ou deux ouvertures sont prévues dans la paroi latérale 14.

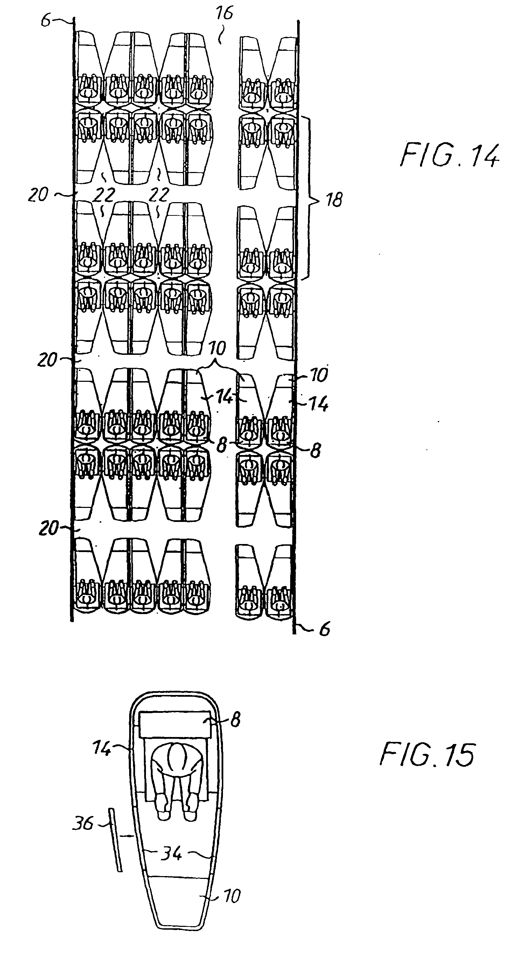

La figure 15 illustre à échelle agrandie un module formé d'un siège 8, de son équipement associé 10 et d'une paroi latérale 14. Afin de n'avoir que des modules identiques, on prévoit deux ouvertures 34 dans la paroi latérale 14, une chaque fois entre le siège 8 et l'équipement 10. Ces deux ouvertures 34 sont identiques et symétriques. Lorsque le module ne doit comporter qu'une seule ouverture 34, l'autre ouverture est alors fermée par une porte 36 comme suggéré par une flèche sur la figure 15. La même porte 36 peut bien entendu également fermer l'autre ouverture 34. Généralement, un seul accès au module est nécessaire. Ainsi donc, chaque module est équipé généralement d'une porte 36.

La fixation des sièges 8, des équipements 10 et des parois latérales 14 sur le plancher de la cabine se fait à l'aide de dispositifs de fixation venant en prise dans des rails longitudinaux intégrés dans le plancher. De tels rails sont prévus de manière classique en matière de construction aéronautique et équipent presque tous les avions destinés au transport de passagers. Ces rails s'étendent sur toute la longueur de la cabine et présentent généralement des points de fixation à intervalles réguliers, par exemple tous les 2,54 cm (soit 1 pouce).

On suppose dans la suite de la description, pour tous les tronçons de cabine décrits, qu'ils sont tous équipés de modules comprenant un siège 8, un équipement 10 et une paroi latérale 14 comme décrits ci-dessus. Toutefois, l'invention peut également s'adapter au cas de simples sièges, munis éventuellement d'un équipement et/ou d'une paroi latérale. Bien entendu, un second équipement, ou un équipement disposé différemment, peut être associé au siège sans sortir du cadre de l'invention.

La figure 1 correspond à un avion dont le fuselage a un diamètre relativement faible. On remarque sur cette figure la présence de cinq rangées de quatre sièges 8. Pour accéder à chacune de ces rangées, un couloir longitudinal 16 est prévu. Ce couloir longitudinal 16 sépare chaque rangée de quatre sièges en deux demi-rangées de deux sièges.

On remarque également sur la figure 1 que les rangées de sièges, qui sont disposées transversalement par rapport à l'axe longitudinal 2 de l'avion sont disposées de telle sorte que les passagers d'une rangée, lorsqu'ils sont assis sur les sièges correspondant, regardent dans le sens opposé des passagers assis sur les sièges de la rangée précédente ou suivante. Ainsi dans une première rangée les passagers assis sur les sièges 8 regardent dans le sens de déplacement de l'avion indiqué par la flèche 4 tandis que les passagers de la rangée suivante sont assis dans le sens opposé et regardent vers l'arrière de l'avion, dans le sens opposé de la flèche 4. En considérant donc deux rangées successives, on remarque que les sièges 8 de ces rangées sont soit dos à dos, soit face à face.

On considère par la suite un ensemble 18 de deux rangées dont les sièges se font face. Cet ensemble 18 présente un couloir transversal 20 qui sépare les deux rangées de cet ensemble et qui croise bien entendu le couloir longitudinal 16. Ce couloir transversal 20 prolonge en fait le couloir longitudinal 16 pour permettre l'accès aux sièges de l'ensemble 18 qui ne sont pas adjacents au couloir longitudinal 16.

On peut prévoir un accès aux sièges adjacents au couloir longitudinal 16 soit directement depuis ce couloir longitudinal 16 soit uniquement à partir du couloir transversal 20. Dans le premier cas, chaque paroi latérale 14 des sièges 8 correspondants présente alors une ouverture du côté du couloir longitudinal 16. Une ouverture peut également être prévue pour cette paroi latérale du côté du siège voisin.

Dans le second cas (accès uniquement par le couloir transversal 20) une ouverture est prévue dans les parois latérales 14 uniquement sur le côté voisin d'un autre siège. Les passagers se trouvant sur un siège adjacent au couloir longitudinal sont alors mieux isolés des divers mouvements de passages dans le couloir longitudinal 16.

L'accès aux sièges depuis le couloir transversal 20 se réalise en passant entre deux équipements 10. Comme indiqué ci-dessus, ces équipements 10 sont de largeur moindre que les sièges 8 correspondants et sont centrés chacun sur le plan de symétrie du siège correspondant. En outre, tous les sièges d'une même rangée sont orientés parallèlement à l'axe longitudinal 2 de l'avion. Ainsi, il subsiste entre deux équipements 10 voisins un espacement qui est utilisé comme passage pour accéder aux deux sièges correspondants.

Le tronçon de cabine de la figure 1 comporte deux ensembles 18 tels celui décrit ci-dessus. Ces deux ensembles sont accolés l'un à l'autre. Une cinquième rangée, correspondant à un demi-ensemble, a été rajoutée pour occuper la place qui était encore disponible jusqu'à l'issue de secours suivante. L'espace intérieur de la cabine est ainsi optimisé pour mettre un maximum de sièges dans l'espace disponible entre deux issues de secours successives longitudinalement.

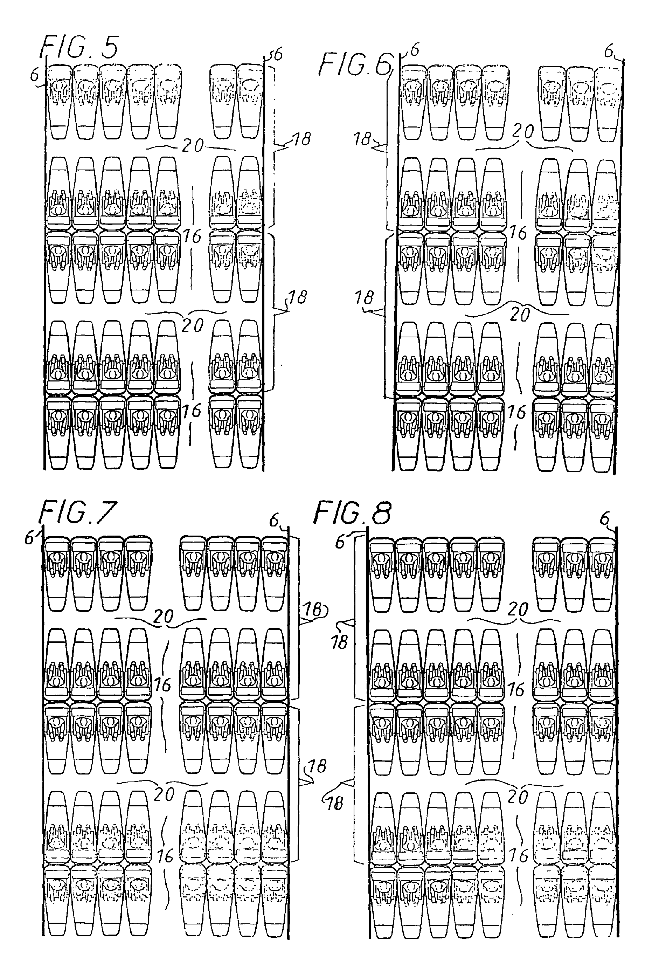

La largeur de chaque couloir transversal 20 est bien entendu suffisante pour permettre l'accès aux sièges qu'il dessert. Avantageusement, on prévoit que la largeur de ces couloirs transversaux est également suffisante pour permettre le passage d'un chariot (appelé couramment "trolley") utilisé par le personnel navigant commercial pour servir repas et boissons aux passagers. Ceci facilite le service des repas et boissons notamment lorsque les couloirs transversaux sont relativement longs (cf figures 8 à 13) mais ceci permet également de faciliter la circulation dans le couloir longitudinal 16. En effet, il devient ainsi possible de se faire croiser des trolleys. Il suffit alors de garer un trolley dans un couloir transversal et de laisser passer l'autre dans le couloir longitudinal 16. La circulation des passagers et du personnel navigant commercial est également favorisée grâce à ces couloirs transversaux.

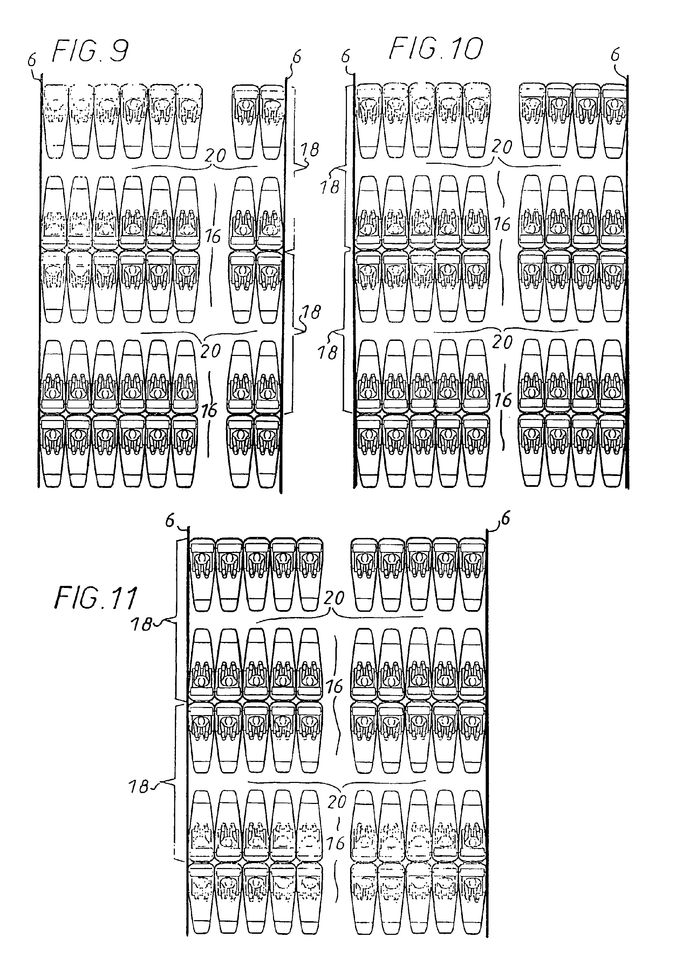

Dans les figures 2 à 13, on retrouve des ensembles 18 de deux rangées de sièges. Ces figures correspondent à des avions dont le fuselage présente un plus grand diamètre et les rangées de sièges comportent, selon les cas de figures, de cinq à douze sièges. On retrouve également à chaque fois un couloir longitudinal 16 qui sépare les rangées en "demi-rangées". En effet, ces "demi-rangées" ne sont pas forcément les mêmes d'un côté et de l'autre du couloir longitudinal 16. Pour des raisons de symétrie, on pourra préférer avoir un nombre de sièges sensiblement identique de chaque côté du couloir longitudinal mais une configuration comme celle représentée figure 9, avec pour chaque rangée deux sièges d'un côté du couloir longitudinal 16 et six de l'autre côté est tout à fait envisageable. Il est même possible de ne prévoir qu'un seul siège d'un côté du couloir longitudinal 16.

La figure 14 montre une variante de réalisation utilisant des modules différents de ceux montrés sur les figures 2 à 13. Ces modules comportent eux aussi un siège 8, un équipement 10 et une paroi latérale 14 entourant le siège 8 et l'équipement 10. Dans cette forme de réalisation, par rapport aux figures 1 à 13, l'équipement 10 d'un module est déplacé par rapport au siège de manière à favoriser l'accès au siège 8 par le couloir transversal 20 correspondant. Dans cette forme de réalisation, le bord d'un équipement 10 est aligné avec un accoudoir du siège 8. De ce fait, la paroi latérale 14 prend une forme différente de celle représentée sur la figure 15. Cette paroi latérale n'est plus symétrique (comme sur la figure 15) mais présente d'un côté un bord droit qui s'étend parallèlement au couloir longitudinal 16 et de l'autre côté un bord incliné qui diverge par rapport au bord droit de l'équipement 10 vers le siège 8.

On réalise ainsi deux types de modules : un premier type pour lequel le bord droit de la paroi latérale 14 se trouve à la droite d'un passager assis sur le siège 8 et un second type de module pour lequel le bord droit se trouve à gauche d'un passager assis sur le siège 8 correspondant.

Sur la figure 14, les modules sont disposés de la manière suivante. Dans une "demi-rangée", on place un bord droit de module le long de la paroi de cabine 6. On dispose ensuite les autres modules de la "demi-rangée" en alternant le type de module. Deux modules voisins sont donc toujours de types différents. De cette manière, on crée des accès 22 en forme de V, chaque accès 22 desservant deux sièges 8. Par rapport aux accès aux sièges des figures 1 à 13, on remarque que la largeur du passage est plus importante et le passage pour rejoindre son siège, ou le quitter, est ainsi plus aisé.

En ce qui concerne l'ouverture faite dans la paroi latérale 14 pour accéder au siège 8, on peut supposer ici par exemple que tous les bords inclinés des parois latérales 14, et eux seuls, sont munis d'une ouverture d'accès au siège 8 correspondant. Bien entendu il pourra être possible de prévoir dans certaines configurations, une ouverture dans le côté droit de la paroi latérale. On peut ainsi par exemple prévoir un système avec deux ouvertures et une porte comme représenté sur la figure 15. Dans la configuration de base, la porte ferme alors l'ouverture réalisée dans le côté droit de la paroi latérale correspondante. Lorsque deux personnes voyagent alors ensemble, elles peuvent s'installer dans deux modules voisins qui se touchent l'un l'autre par leurs côtés droits. Une fois installés, ils peuvent chacun déplacer la porte fermant l'ouverture du côté droit de leur module pour fermer l'ouverture du côté incliné de leur module. Ils créent ainsi un module double isolé des autres passagers.

Dans toutes ces déclinaisons, on remarque qu'il est possible de placer un grand nombre de sièges dans un espace donné. Ceci s'explique notamment par la présence d'un couloir longitudinal unique. Pour un tronçon de cabine donné, il est possible de placer autant de modules tels que décrit ci-dessus et permettant à un passager de voyager couché que de sièges simplement inclinables ne permettant pas d'avoir une position couchée et disposés de manière classique, c'est-à-dire en rangées, tous les sièges étant orientés dans le même sens et avec des couloirs longitudinaux pour éviter que les passagers se déplaçant doivent s'excuser auprès d'un (ou plusieurs) passager voisin. La présente invention permet alors, par rapport à des aéronefs de l'art antérieur, soit de faire voyager le même nombre de passagers mais avec un confort plus grand, soit un plus grand nombre de passagers avec le même confort. Avec de petits avions (figures 1 à 4) le gain en passagers, voyageant dans les mêmes conditions de confort, pour un même tronçon de cabine, est moins important que pour des avions de taille plus importante (figures 8 à 13).

Toutes les configurations représentées présentent l'avantage de faciliter la circulation à bord de l'avion. Le service des repas et des boissons peut s'effectuer plus facilement et il est possible dans la plupart des cas d'éviter les bouchons.

Les configurations représentées sur le dessin présentent aussi l'avantage de pouvoir s'adapter à tous types d'avions existants ou à venir. Le nombre de sièges de chaque rangée se déduit de la largeur que l'on souhaite donner aux sièges et de la largeur minimale du couloir longitudinal. En outre, il est possible de facilement combiner des classes de confort différentes. Un même couloir longitudinal peut ainsi desservir des rangées transversales qui n'ont pas toutes le même nombre de sièges. Le même couloir longitudinal peut ainsi desservir dans une partie de l'avion des sièges première classe, puis des sièges de classe affaire et enfin des sièges de classe économique.

La présente invention ne se limite pas aux formes de réalisation décrites ci-dessus à titre d'exemples non limitatifs mais concerne également toutes les variantes à la portée de l'homme du métier dans le cadre des revendications ci-après.

## Revendications

1. Cabine d'aéronef avec un ensemble (18) de sièges d'aéronef comportant deux rangées de sièges (8) disposées transversalement par rapport à l'axe longitudinal (2) de la cabine, un couloir longitudinal (16) unique permettant l'accès aux rangées transversales,
dans laquelle les deux rangées transversales sont disposées en vis-à-vis, un couloir transversal (20) sépare les deux rangées de sièges (8), dans chaque rangée de sièges, au moins un siège (8) se trouve d'un côté du couloir longitudinal (16) et au moins deux sièges (8) se trouvent de l'autre côté du couloir longitudinal (16), **caractérisé en ce que** l'ensemble de sièges comporte en outre, associé à chaque sièges (8), un équipement (10) disposé en regard et à distance du siège, de largeur inférieure à celle du siège, cet équipement délimitant l'espace individuel, destiné au passager, du couloir transversal (20).

2. Cabine d'aéronef selon la revendication 1, **caractérisée en ce que** chaque siège (8) est orienté parallèlement à l'axe du couloir longitudinal (16).

3. Cabine d'aéronef selon l'une des revendications 1 ou 2, **caractérisée en ce que** l'équipement (10) comporte une surface d'appui disposée à une hauteur sensiblement égale à celle de l'assise du siège, à une dizaine de centimètres près.

4. Cabine d'aéronef selon l'une des revendications 1 à 3, **caractérisée en ce que** chaque siège (8) coopère avec l'équipement (10) disposé face à lui pour réaliser une surface de couchage.

5. Cabine d'aéronef selon l'une des revendications 1 à 4, **caractérisée en ce que** chaque siège (8) comporte une assise, un dossier et deux accoudoirs , et **en ce que** le siège (8) est entouré du côté de son dossier et de ses accoudoirs d'une paroi latérale (14) servant de séparation avec un siège voisin.

6. Cabine d'aéronef selon l'une des revendications 1 à 6, **caractérisé en ce que** chaque siège (8) comporte une assise, un dossier et deux accoudoirs, **en ce qu'**une paroi latérale (14) vient entourer chaque siège du côté de son dossier et de ses accoudoirs, ainsi que l'équipement (10) associé au siège, et **en ce qu'**au moins une ouverture est prévue dans la paroi latérale pour accéder au siège.

7. Cabine d'aéronef selon la revendication 6, **caractérisée en ce que** chaque équipement (10) est sensiblement centré sur l'axe longitudinal (12) du siège correspondant, et **en ce que** chaque paroi latérale (14) présente une ouverture entre le siège (8) et l'équipement (10) sur chacun de ses côtés se trouvant face à un siège voisin.

8. Cabine d'aéronef selon la revendication 7, **caractérisée en ce que** chaque paroi latérale (14) présente deux ouvertures de largeur identique, une de chaque côté du siège (8) correspondant, et **en ce qu'**une porte est prévue pour fermer l'une ou l'autre des ouvertures.

9. Cabine d'aéronef selon la revendication 6, **caractérisée en ce que** la paroi latérale (14) comporte un premier côté sensiblement parallèle au couloir longitudinal (16), **en ce que** le siège (8) et l'équipement (10) sont disposés contre ce premier côté, **en ce qu'**un second côté de la paroi, opposé au premier côté, s'évase par rapport à ce premier côté en partant de l'équipement (10), et **en ce que** l'ouverture pour accéder au siège est réalisée dans le second côté.

10. Cabine d'aéronef selon la revendication 9, **caractérisée en ce qu'**il comporte un premier type de sièges pour lesquels le premier côté de la paroi latérale (14), celui qui est sensiblement parallèle au couloir longitudinal, se trouve à droite d'un passager assis sur le siège et un second type de sièges pour lesquels le premier côté de la paroi se trouve à gauche d'un passager assis sur le siège, **en ce que** les sièges sont disposés de telle sorte que pour les sièges se trouvant à proximité d'une paroi de cabine, le premier côté de la paroi correspondante fait face à la paroi de cabine, et **en ce que**, dans une rangée transversale de sièges, entre la paroi de cabine et le couloir longitudinal, les types de sièges alternent d'un siège à l'autre.

11. Aéronef, **caractérisé en ce qu'**il comporte au moins une cabine d'aéronef selon l'une des revendications 1 à 10.

## Claims

1. An aircraft cabin with a set (18) of aircraft seats comprising two rows of seats (8) arranged transversely relative to the longitudinal axis (2) of the cabin, a single longitudinal aisle (16) allowing access to the transverse rows,
in which the two transverse rows are arranged opposite one another, a transverse aisle (20) separates the two rows of seats (8), in each row of seats at least one seat (8) is located to one side of the longitudinal aisle (16) and at least two seats (8) are located on the other side of the longitudinal aisle (16), **characterised in that** the set of seats also comprises, associated with each seat (8), an appurtenance (10) arranged facing and at a distance from the seat, with a lesser width than that of the seat, this appurtenance delimiting the individual space, for the passenger, from the transverse aisle (20).

2. The aircraft cabin according to claim 1, **characterized in that** each seat (8) is positioned parallel to the axis of the longitudinal aisle (16).

3. The aircraft cabin according to claims 1 or 2, **characterized in that** the appurtenance (10) comprises a support surface arranged at a height more or less equal to that of the sitting surface of the seat, within about ten centimetres.

4. The aircraft cabin according to one of claims 1 to 3, **characterized in that** each seat (8) cooperates with the appurtenance (10) arranged facing it to make a bedding surface.

5. The aircraft cabin according to one of claims 1 to 4, **characterized in that** each seat (8) comprises a sitting surface, a back and two armrests, and **in that** the seat (8) is surrounded on its back and armrest side by a lateral wall (14) serving as a divider with a neighbouring seat.

6. The aircraft cabin according to one of claims 1 to 6, **characterized in that** each seat (8) comprises a sitting surface, a back and two armrests, and **in that** a lateral wall (14) surrounds each seat on its back and armrest side, as well as the appurtenance (10) combined with the seat, and **in that** at least one opening is provided in the lateral wall for accessing the seat.

7. The aircraft cabin according to claim 6, **characterized in that** each appurtenance (10) is substantially centred on the longitudinal axis (12) of the corresponding seat, and **in that** each lateral wall (14) has an opening between the seat (8) and the appurtenance (10) on each of its sides located facing a neighbouring seat.

8. The aircraft cabin according to claim 7, **characterized in that** each lateral wall (14) has two openings of identical width, one on each side of the corresponding seat (8), and **in that** a door is provided to close one or the other of the openings.

9. The aircraft cabin according to claim 6, **characterized in that** the lateral wall (14) comprises a first side substantially parallel to the longitudinal aisle (16), **in that** the seat (8) and the appurtenance (10) are arranged against this first side, **in that** a second side of the wall, opposite the first side, widens out in relation to this first side starting from the appurtenance (10), and **in that** the opening for accessing the seat is made in the second side.

10. The aircraft cabin according to claim 9, **characterized in that** it comprises a first type of seats for which the first side of the lateral wall (14), the one which is substantially parallel to the longitudinal aisle, is to the right of a passenger sitting in the seat, and a second type of seats for which the first side of the wall is left of a passenger sitting in the seat, **in that** the seats are arranged so that for the seats near a cabin wall the first side of the corresponding wall faces the cabin wall and **in that**, in a transverse row of seats, between the cabin wall and the longitudinal aisle, the types of seats alternate from one seat to the other.

11. An aircraft, **characterized in that** it comprises at least one aircraft cabin according to one of claims 1 to 10.

## Patentansprüche

1. Kabine für ein Luftfahrzeug mit einer Gruppe (18) von Luftfahrzeugsitzen, enthaltend zwei Reihen von Sitzen (8), die quer zur Längsachse (2) der Kabine angeordnet sind, wobei ein einziger Längsgang (16) den Zugang zu den quer verlaufenden Reihen gestattet, wobei die beiden quer verlaufenden Reihen einander gegenüberliegend angeordnet sind, ein quer verlaufender Gang (20) die beiden Reihen von Sitzen (8) trennt, in jeder Sitzreihe zumindest ein Sitz (8) sich auf der einen Seite des Längsgangs (16) befindet und zumindest zwei Sitze (8) sich auf der anderen Seite des Längsgangs (16) befinden, **dadurch gekennzeichnet, dass**
die Gruppe von Sitzen ferner einem jeden Sitz (8) zugeordnet eine Einrichtung (10) aufweist, die im Abstand von dem Sitz und diesem entgegengesetzt angeordnet ist und in der Breite kleiner ist als der Sitz, wobei diese Einrichtung den Einzelraum, der für den Passagier bestimmt ist, vom quer verlaufenden Gang (20) abgrenzt.

2. Kabine für ein Luftfahrzeug nach Anspruch 1,
**dadurch gekennzeichnet, dass** jeder Sitz (8) parallel zur Achse des Längsgangs (16) ausgerichtet ist.

3. Kabine für ein Luftfahrzeug nach einem der Ansprüche 1 oder 2,
**dadurch gekennzeichnet, dass** die Einrichtung (10) eine Abstützfläche aufweist, die in einer Höhe im Wesentlichen gleich der Höhe der Sitzfläche des Sitzes +/- 10 cm angeordnet ist.

4. Kabine für ein Luftfahrzeug nach einem der Ansprüche 1 bis 3, **dadurch gekennzeichnet, dass** jeder Sitz (8) mit der diesem gegenüberliegend angeordneten Einrichtung (10) zusammenwirkt, um eine Liegefläche zu bilden.

5. Kabine für ein Luftfahrzeug nach einem der Ansprüche 1 bis 4, **dadurch gekennzeichnet, dass** jeder Sitz (8) eine Sitzfläche, eine Rückenlehne und zwei Armlehnen aufweist und dass der Sitz (8) auf der Seite seiner Rückenlehne und seiner Armlehnen von einer Seitenwand (14) umgeben ist, die als Abtrennung von einem Nachbarsitz dient.

6. Kabine für ein Luftfahrzeug nach einem der Ansprüche 1 bis 6, **dadurch gekennzeichnet, dass** jeder Sitz (8) eine Sitzfläche, eine Rückenlehne und zwei Armlehnen aufweist, dass eine Seitenwand (14) jeden Sitz auf der Seite seiner Rückenlehne und seiner Armlehnen sowie die dem Sitz zugeordnete Einrichtung (10) umgibt und dass zumindest eine Öffnung in der Seitenwand vorgesehen ist, um Zugang zum Sitz zu gestatten.

7. Kabine für ein Luftfahrzeug nach dem Anspruch 6,
**dadurch gekennzeichnet, dass** jede Einrichtung (10) im Wesentlichen auf die Längsachse (12) des entsprechenden Sitzes zentriert ist und dass jede Seitenwand (14) eine Öffnung zwischen dem Sitz (8) und der Einrichtung (10) auf jeder ihrer Seiten aufweist, die einem Nachbarsitz gegenüberliegt.

8. Kabine für ein Luftfahrzeug nach Anspruch 7,
**dadurch gekennzeichnet, dass** jede Seitenwand (14) zwei gleich breite Öffnungen aufweist, nämlich eine auf jeder Seite des entsprechenden Sitzes (8), und dass eine Tür vorgesehen ist, um die eine oder andere Öffnung zu verschließen.

9. Kabine für ein Luftfahrzeug nach Anspruch 6,
**dadurch gekennzeichnet, dass** die Seitenwand (14) eine erste Seite aufweist, die sich im Wesentlichen parallel zum Längsgang (16) erstreckt, dass der Sitz (8) und die Einrichtung (10) gegen diese erste Seite angeordnet sind, dass eine der ersten Seite entgegengesetzte zweite Seite der Wand von der Einrichtung (10) ausgehend sich bezüglich dieser ersten Seite erweiternd erstreckt und dass die Öffnung für den Zugang zum Sitz in der zweiten Seite ausgeführt ist.

10. Kabine für ein Luftfahrzeug nach Anspruch 9,
**dadurch gekennzeichnet, dass** sie eine erste Art von Sitzen aufweist, bei denen die erste Seite der Seitenwand (14), nämlich diejenige, die im Wesentlichen parallel zum Längsgang verläuft, sich rechts von einem Passagier befindet, der auf dem Sitz sitzt, sowie eine zweite Art von Sitzen, bei denen sich die erste Seite der Wand links von einem Passagier befindet, der auf dem Sitz sitzt, dass die Sitze so angeordnet sind, dass bei den Sitzen, die sich in der Nähe einer Kabinenwand befinden, die erste Seite der entsprechenden Wand der Kabinenwand gegenüberliegt, und dass bei einer quer verlaufenden Reihe von Sitzen zwischen der Kabinenwand und dem Längsgang die Art von Sitzen von einem Sitz zum nächsten wechselt.

11. Luftfahrzeug, **dadurch gekennzeichnet, dass** es zumindest eine Kabine für ein Luftfahrzeug nach einem der Ansprüche 1 bis 10 aufweist.
